# EUROPÄISCHE PATENTSCHRIFT

(11) **EP 0 664 369 B1**
(45) Veröffentlichungstag und Bekanntmachung des Hinweises auf die Patenterteilung: **29.04.1998**
(21) Anmeldenummer: 95100151.0
(22) Anmeldetag: 07.01.1995
(51) Int. Cl.: E06B 3/96, E06B 3/22, E06B 3/58, B29C 65/78

(54) **Fenster- oder Türflügel und Verfahren zu dessen Herstellung**
Window or door wing and assembly method therefor
Vantail de porte ou de fenêtre et son procédé d'assemblage

(30) Priorität: 25.01.1994 DE 4401969
(43) Veröffentlichungstag der Anmeldung: 26.07.1995
(73) Patentinhaber: BRÜGMANN FRISOPLAST GmbH, D-26871 Papenburg (DE)
(72) Erfinder:
(74) Vertreter: Eikenberg, Kurt-Rudolf, Dr. Dipl.-Chem.

(56) Entgegenhaltungen:
- EP-A- 0 563 030
- DE-A- 2 044 430

## Beschreibung

Die Erfindung betrifft ein Verfahren zur Herstellung eines Fenster- oder Türflügels aus eckverschweißten Rahmenprofilen mit einem Glasfalz zur Aufnahme einer Glasscheibe und mit Glasleisten zur Sicherung der Glasscheibe, wobei die Glasleisten in Rastnuten im Rahmenprofil eingreifen, bei dem die Glasleiten zu einem eckverschweißten Glasleistenrahmen verbunden sind.

Bei vorprofilierten Fenster- und Türsystemen z.B. aus Aluminium oder Kunststoff wird die Glasscheibe nach dem Einlegen in den Glasfalz üblicherweise durch einzelne, auf Gehrung geschnittene Glasleisten im Rahmen fixiert. Dieser ansich verhältnismäßig einfach erscheinende Vorgang hat sich als unerwartet aufwendig erwiesen, und zwar bedingt durch die Tatsache, daß beim Verschweißen der Rahmenteile - besonders bei Kunststoff - fertigungstechnische Toleranzen unvermeidlich sind. Derartige Toleranzen sind für den Sitz des Flügels im Blendrahmen und für den Sitz der Glasscheibe im Flügel praktisch ohne Bedeutung, wirken sich jedoch auf den Sitz der Glasleisten im Glasfalz erheblich aus.

Für die Glasleisten ist ein genauer strammer Paßsitz im Eckbereich des Rahmens erforderlich, und zwar einmal aus Gründen eines sauberen, ansprechenden Fugenbildes und zum anderen auch deshalb, weil der Glasfalz üblicherweise von außen belüftet ist und daher nur durch die Glasleiste nach innen winddicht abgeschlossen wird, jedenfalls bei den überwiegend zum Einsatz kommenden Rahmen mit innenliegendem Glasfalz. Ein Untermaß der Glasleisten beeinträchtigt also nicht nur den optischen Eindruck des verglasten Rahmens, sondern führt im Eckbereich auch infolge eines Staubeintrags von außen zu starken Verschmutzungen, die sich nur schlecht beseitigen lassen. Andererseits kann ein Übermaß an Glasleisten unzulässig hohe Spannungen im Eckbereich und - besonders bei Kunststoff - Eckrisse des Rahmens ergeben.

Um den erforderlichen Paßsitz der Glasleisten zu gewährleisten, müssen nach dem Verschweißen der Rahmenprofile zunächst die genauen Istmaße der Glasleisten ausgemessen und danach die einzelnen Glasleisten zugeschnitten werden. Oftmals müssen die Glasleisten auch nach dem Einpassen in den Rahmen noch individuell nachgearbeitet werden, was besonders für Trapez-, Dreiecks- und Bogenrahmen zutrifft, die im Eckbereich eine Schmiege erfordern. Wenn die Verglasung des Rahmens nicht durch den Rahmenhersteller, sondern durch Dritte erfolgt, müssen die Glasleisten zusätzlich noch eindeutig mit ihrer Position im Rahmen gekennzeichnet werden, um Fehlpositionen zu vermeiden, die in einzelnen Ecken zu Untermaßen oder Übermaßen führen würden. Dies alles bedingt einen erheblichen Arbeitsaufwand, der sich durchaus spürbar auf die Herstellungskosten eines Fensters oder einer Tür auswirkt.

Hier setzt die Erfindung ein. Sie hat zum Ziel, den Produktionsablauf so zu vereinfachen, daß ohne individuelle Vermaßung und Bearbeitung der Glasleisten ein paßgenauer Sitz und eine optimale Eckfugenausbildung der Glasleisten sichergestellt wird. Dabei soll eine Verbindung der Rahmenprofile mit den Glasleisten verhindert werden.

Dieses Ziel erreicht die Erfindung für den eingangs bezeichneten Fenster- oder Türflügel durch ein Verfahren, bei dem - wie insoweit aus der EP-A-563 030 bekannt - die Rahmenprofile des Flügels mit den Glasleisten verrastet werden, die verrasteten Teile dann gemeinsam auf Gehrung geschnitten, gemeinsam eckverschweißt und gemeinsam verputzt werden, worauf der so gebildete Glasleistenrahmen von dem Flügelrahmen getrennt wird. Um die Trennung des Glasleistenrahmens von dem Flügelrahmen zu erleichtern wird aber erfindungsgemäß zwischen Rahmenprofil und Glasleiste im Bereich der Schweißecken vor dem Verschweißen eine Trennfolie eingelegt.

Durch die Erfindung wird sichergestellt, daß der Flügelrahmen und der Glasleistenrahmen in einem Arbeitsgang als eine Einheit entstehen und exakt die gleichen Toleranzen aufweisen. Der nach dem gemeinsamen Verschweißen der Rahmenprofile und der Glasleisten entstandene Glasleistenrahmen hat automatisch den erforderlichen Paßsitz im Flügelrahmen und besitzt darüberhinaus eine bisher nicht erreichte Fugenausbildung im Eckbereich, nämlich verschweißte und damit absolut dichte Eckfugen. Außerdem entfällt der gesamte bisherige Zusatzaufwand für die Vermaßung und Bearbeitung der einzelnen Glasleisten, denn der Zuschnitt, das Verschweißen und das Verputzen des Glasleistenrahmens kann nunmehr gemeinsam mit den ohnehin für die Herstellung des Flügelrahmens erforderlichen Arbeitsschritten erfolgen. Im Ergebnis wird somit ohne jeden Zusatzaufwand eine hohe Präzision, ein sauberes Fugenbild und eine absolute Eckendichtheit des Glasleistenrahmens ohne jeden Zusatzaufwand erreicht. Eine Schweißverbindung der Rahmenprofile mit den Glasleisten wird dabei durch das Einlegen der Trennfolie vermieden.

Die Rastverbindung zwischen dem Flügelrahmen und dem Glasleistenrahmen muß so beschaffen sein, daß der Glasleistenrahmen als eine Einheit vom Flügelrahmen getrennt und nach der Verglasung wieder eingesetzt werden kann. Es gibt zahlreiche konstruktive Ausbildungen, welche diese Anforderung an die Rastverbindung erfüllen.

Die Erfindung wird nachfolgend in Ausführungsbeispielen anhand der Zeichnung näher erläutert. Dabei stellen dar:
- Fig. 1: schematisch einen Flügelrahmen mit innenliegender Glasleiste im Schnitt,
- Fig. 2: die Ansicht einer Ecke des Rahmens gemäß Fig. 1 in Richtung des Pfeils II,
- Fig. 3: schematisch einen Flügelrahmen mit außenliegender Glasleiste im Schnitt, und
- Fig. 4: eine gegenüber Fig. 1 abgewandelte Ausführungsform eines Flügelrahmens mit innenliegender Glasleiste.

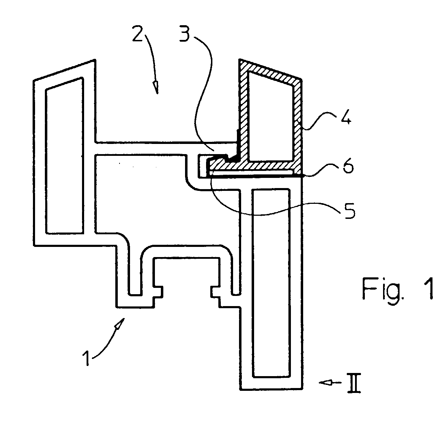

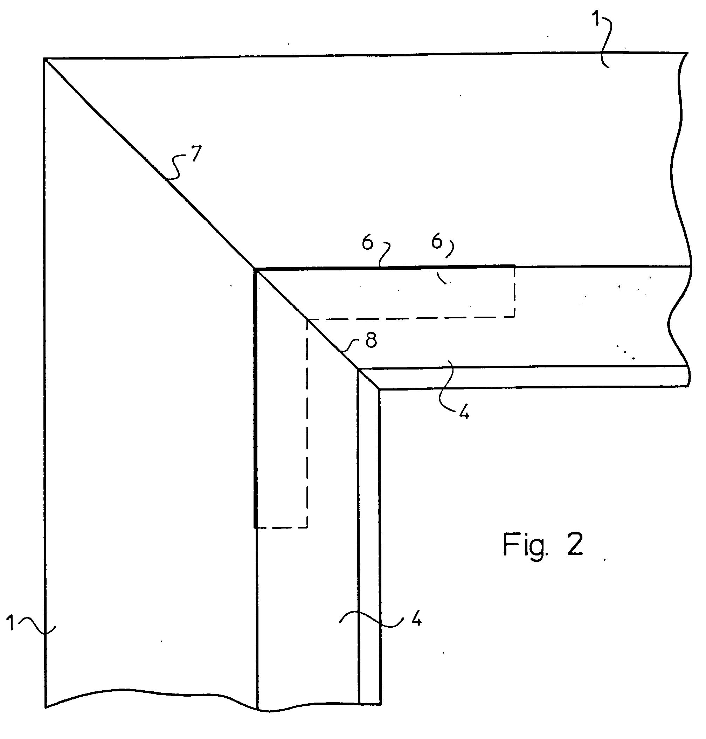

Im Beispiel der Fig. 1 und 2 ist ein Flügelrahmenprofil 1 aus Kunststoff dargestellt, das einen Fensterrahmen oder einen Rahmen für eine verglaste Tür bilden kann. Das Rahmenprofil 1 besitzt einen Glasfalz 2 und eine Rastnut 3, in die eine Glasleiste 4 mit einer entsprechenden Rastnase 5 eingesetzt werden kann. Die übrige Ausbildung des Rahmenprofils 1 ist konventionell und für die Erfindung ohne Belang. Die bei Kunststoff-Rahmen üblichen Versteifungseinlagen sind nicht dargestellt, ebenso auch nicht die Öffnungen zum Belüften des Glasfalzes und die in den Glasfalz einzusetzende Glasscheibe mit den Dichtungen.

Zur Herstellung eines Fensters oder einer Tür wird das Rahmenprofil 1 mit der Glasleiste 4 verrastet, im verrasteten Zustand gemeinsam zugeschnitten, dann werden die zugeschnittenen und verrasteten Teile gemeinsam verschweißt, wobei sich in einem Arbeitsgang eine Schweißnaht 7 für das Rahmenprofil und eine Schweißnaht 8 für die Glasleisten ausbilden. Diese beiden Schweißnähte werden danach auch gemeinsam in einem Arbeitsgang verputzt. Dadurch wird gleichzeitig ein eckverschweißter Flügelrahmen und ein eckverschweißter Glasleistenrahmen gebildet, und zwar derart, daß beide Rahmen genau die gleichen Toleranzen aufweisen.

Anschließend wird der Glasleistenrahmen von dem Flügelrahmen getrennt. Dann wird eine Glasscheibe zusammen mit den üblichen Dichtungen in den Glasfalz 2 eingesetzt und der Glasleistenrahmen wieder mit dem Flügelrahmen verrastet. Dabei spielt es keine Rolle, ob die Glasscheibe durch den Rahmenhersteller oder durch Dritte eingesetzt wird, denn es ist nicht mehr erforderlich, die Position einzelner Glasleisten in Bezug auf den Flügelrahmen zu kennzeichnen.

Die Trennbarkeit des Glasleistenrahmens vom Flügelrahmen hängt von der Ausbildung des Rahmenprofils 1, der Glasleiste 4 und der Rastverbindung 3, 5 ab. Es ist möglich, diese Teile so auszubilden und den Schweißvorgang so zu führen, daß nur die Rahmenteile in sich und die Glasleisten in sich, nicht aber die Rahmenteile mit den Glasleisten verschweißt werden. Erfindungsgemäß wird jedoch im Schweißbereich, also im Eckbereich des Rahmens vor der Verrastung eine nichtverschweißbare Trennfolie zwischen Rahmenprofil 1 und Glasleiste 4 eingelegt welches eine unerwünschte Verbindung des Rahmenprofils 1 mit der Glasleiste 4 verhindert. Eine solche Trennfolie ist bei 6 in Fig. 1 und 2 angedeutet.

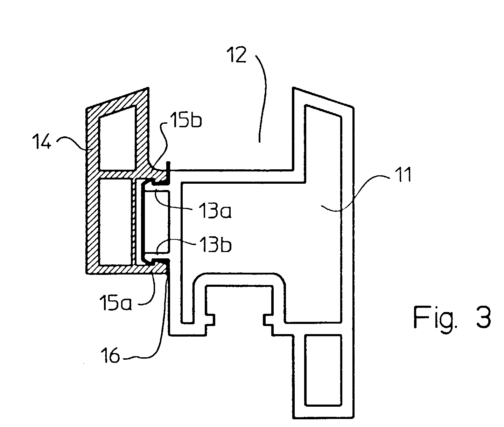

Die Ausführungsform gemäß Fig. 3 unterscheidet sich von der Ausführung gemäß Fig. 1 und 2 nur darin, daß es sich um eine außenliegende Glasleiste 14 statt einer innenliegenden Glasleiste 4 handelt, die mit zwei Rastnasen 15a, 15b in zwei zugeordnete Rastvorsprünge 13a, 13b des Rahmenprofils 11 eingreift und einen Glasfalz, 12 im Rahmenprofil abschließt, wobei auch wieder eine Trennfolie 16 eingesetzt wird. Die (auch hier ncht dargestellten) Öffnungen zur Belüftung des Glasfalzes befinden sich in diesem Fall in der Glasleiste 14. Ansonsten gilt das zur Ausführung gemäß Fig. 1 und 2 Gesagte in gleicher Weise auch für die Ausführung gemäß Fig. 3, wobei nur noch angemerkt sei, daß die Ausführung gemäß Fig. 3 dann von Vorteil ist, wenn eine möglichst große Lichtöffnung und damit ein möglichst schmaler Flügelrahmen erwünscht ist.

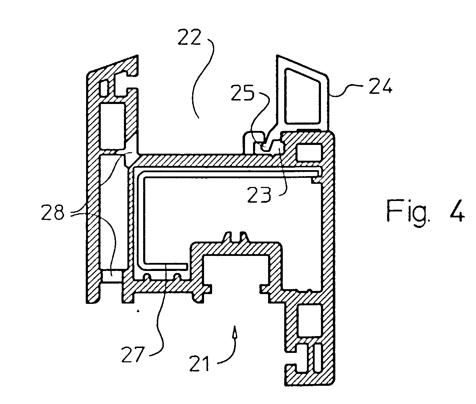

Bei den vorangehend beschriebenen Beispielen ist die Rastverbindung zwischen dem Rahmenprofil und der Glasleiste so ausgebildet, daß der Glasleistenrahmen durch eine Bewegung senkrecht zur Ebene der Glasscheibe mit dem Flügelrahmen verrastet bzw. entrastet wird. Dies kann zur einfacheren Handhabung des Glasleistenrahmens zwar zweckmäßig sein, ist aber nicht unbedingt erforderlich. Ebenso kann die Rastverbindung, wie dies anhand der Fig. 4 in einem weiteren Beispiel veranschaulicht ist, auch derart ausgebildet sein, daß eine gewisse Dreh- und Kippbewegung der Glasleiste relativ zur Ebene der Glasscheibe zum Verrasten und Entrasten der Glasleiste erforderlich ist.

Im Beispiel der Fig. 4 besitzt das Rahmenprofil 21 auf der einen Seite des Glasfalzes 22 eine Rastnut 23, die mit einer Rastnase 25 der Glasleiste 26 so zusammenwirkt, daß die Glasleiste mit leichter Schrägstellung in die Rastnut eingesetzt wird. Eine solche Schrägstellung ist auch bei einem ausreichend elastischen Glasleistenrahmen aus Kunststoff durchaus möglich, insbesondere bei größeren Fensteröffnungen.

Eine Trennfolie ist in Fig. 4 nicht mehr dargestellt. Dafür läßt Fig. 4 aber eine Rahmenversteifung 27 in Form eines verzinkten Stahlprofils sowie die Belüftungsöffungen 28 für den Glasfalz erkennen.

## Patentansprüche

1. Verfahren zur Herstellung eines Fenster- oder Türflügels aus eckverschweißten Rahmenprofilen (1) mit einem Glasfalz (2) zur Aufnahme einer Glasscheibe und mit Glasleisten (4) zur Sicherung der Glasscheibe, wobei die Glasleisten in Rastnuten (3) im Rahmenprofil (1) eingreifen, bei dem die Glasleisten zu einem eckverschweißten Glasleistenrahmen verbunden sind und wobei die Rahmenprofile (1) des Flügels mit den Glasleisten (4) verrastet werden, die verrasteten Teile dann gemeinsam auf Gehrung geschnitten, gemeinsam eckverschweißt und gemeinsam verputzt werden, worauf der so gebildete Glasleistenrahmen von dem Flügelrahmen getrennt wird,
dadurch gekennzeichnet, daß in die Rastfläche zwischen Rahmenprofil und Glasleiste im Bereich der Schweißecken vor dem Verschweißen eine Trennfolie (6) eingelegt wird.

## Claims

1. Process for producing a window sash or door leaf comprising corner-welded frame profiles (1), with a glass rebate (2) for receiving a glass pane and with glazing bars (4) for securing the glass pane, the glazing bars engaging in latching grooves (3) in the frame profile (1), in which process the glazing bars are connected to form a corner-welded glazing-bar frame, and the frame profiles (1) of the sash/leaf being latched to the glazing bars (4), and the latched parts are then jointly mitred, corner-welded and finished, whereupon the glazing-bar frame formed in this manner is separated from the sash/leaf frame, characterized in that a release film (6) is introduced into the latching surface between the frame profile and glazing bar, in the region of the weld corners, before the welding operation.

## Revendications

1. Procédé de fabrication d'un vantail de fenêtre ou de porte en profilés de cadre (1) soudés dans les coins avec une rainure à verre (2) pour loger une vitre de verre et avec des baguettes de verre (4) pour bloquer la vitre de verre, les baguettes de verre s'engrenant dans des rainures d'encoche (3) dans le profilé de cadre (1), pour lequel les baguettes de verre sont reliées en un cadre de baguettes de verre soudées dans les coins et les profilés de cadre (1) du vantail prenant l'encoche avec les baguettes de verre (4), les parties enclenchées étant ensuite coupées ensemble à onglet, étant soudées ensemble dans les coins et étant crépissées ensemble, ce après quoi le cadre de baguettes de verre ainsi formé est séparé du cadre du vantail, caractérisé en ce qu'une feuille de séparation (6) est insérée dans la surface d'enclenchement entre le profilé de cadre et la baguette de verre dans la zone des coins soudés avant le soudage.
